# EUROPÄISCHE PATENTSCHRIFT

(11) **EP 0 983 172 B1**
(45) Veröffentlichungstag und Bekanntmachung des Hinweises auf die Patenterteilung: **06.05.2004**
(21) Anmeldenummer: 99907482.6
(22) Anmeldetag: 02.02.1999
(51) Int. Cl.: B60S 1/38

(54) **WISCHBLATT UND AUSTAUSCHSATZ FÜR EIN WISCHBLATT**
WIPER BLADE AND REPLACEMENT KIT FOR A WIPER BLADE
RACLETTE D'ESSUIE-GLACE ET KIT DE REMPLACEMENT POUR RACLETTE D'ESSUIE-GLACE

(30) Priorität: 18.03.1998 DE 19811702
(43) Veröffentlichungstag der Anmeldung: 08.03.2000
(73) Patentinhaber: Valeo Wischersysteme GmbH, 74321 Bietigheim-Bissingen (DE)
(72) Erfinder: HERRMANN, Volker, D-97941 Tauberbischofsheim (DE); EGNER-WALTER, Bruno, D-74076 Heilbronn (DE)
(74) Vertreter: Jahn, Wolf-Diethart
(86) Internationale Anmeldenummer: PCT/EP1999/000682
(87) Internationale Veröffentlichungsnummer: WO 1999/047398

(56) Entgegenhaltungen:
- DE-A- 4 417 713
- DE-A- 19 522 273
- US-A- 3 153 254
- US-A- 3 823 437

## Beschreibung

Die Erfindung bezieht sich auf ein Wischblatt für eine Scheibenwischvorrichtung zum Reinigen einer Scheibe an einem Fahrzeug, wobei das Wischblatt mit den Merkmalen des Oberbegriffs des Anspruchs 1 ausgestattet ist. Weiterhin bezieht sich die Erfindung auf einen komplett vormontierten Austauschsatz für ein solches Wischblatt, der die Merkmale des Oberbegriffs des Anspruchs 11 aufweist.

Ein Wischblatt und ein Austauschsatz dieser Art sind bereits aus der EP-A-0 714 820 A1 bekannt. Bei diesem Wischblatt ist die austauschbare Wischleiste aus elastischem, gummiartigen Material mit ihrer Kopfleiste in den Haltekrallen eines langgestreckten, mehrgliedrigen Traggestells gehalten, indem die Haltekrallen die Kopfleiste teilweise von oben umfassen und in Längsnuten eingreifen, die an den gegenüberliegenden Längsseiten der Kopfleiste ausgebildet sind. Die Arretierung in Längsrichtung der Wischleiste erfolgt über eine an einem Ende der Kopfleiste befestigte, aus Blech gefertigte Federklammer. Zu dieser Federklammer gehört ein flacher, elastisch auslenkbarer Rastarm, der sich von einem Basisteil der Federklammer auf dem Rücken der Kopfleiste in Längsrichtung erstreckt, die zugeordnete Haltekralle des Traggestells quert und mit einem Haken die Haltekralle hintergreift. Der Haken ist durch das Ende des Rastarmes gebildet, das V-förmig nach oben zurückgebogen ist, so daß es mit dem übrigen Rasthaken einen spitzen Winkel bildet. Die Stirnseite des Hakens wirkt als Anschlagmittel mit der inneren Stirnseite der Haltekralle des Traggestells zusammen. In vorteilhaft einfacher Weise kann eine mit einer Federschiene und einer an der Kopfleiste befestigten Federklammer zu einem vormontierten Austauschsatz komplettierte Wischleiste durch Einschieben in ihre Längsrichtung in die Krallen des Traggestells an diesem montiert werden. Die Verrastung des mit einem Haken ausgestatteten Armes der Federklammer an der Haltekralle des Traggestells erfolgt dabei unter der Wirkung der Einschubkraft selbsttätig.

Problematisch ist jedoch die einer Montage einer neuen Wischleiste bzw. eines neuen Austauschsatzes zwangsweise vorangestellte Demontage der zu ersetzenden Wischleiste bzw. des zu ersetzenden Austauschsatzes. Durch eine manuelle Handhabung muß hierbei der Haken bzw. der mit einem Haken ausgebildete Rastarm der Federklammer entgegen seinen elastischen Rückstellkräften ausgelenkt werden, um die Arretierung zu lösen. Gleichzeitig muß die Wischleiste in Auszugsrichtung aus den Haltekrallen des Traggestells herausgezogen werden. Aufgrund der Anordnung des Rastarmes zwischen dem Rücken der Kopfleiste und der Unterseite des Traggestells ist der Zugriff zu dem zu entriegelnden Rastarm erschwert. Außerdem ist der Haken selbst wegen der plastischen Umformung zu der V-förmigen Umbiegung relativ schwer entgegen seiner elastischen Rückstellkräfte weiter zusammenzudrücken. Zum Lösen der Längsarretierung der Wischleiste bzw. des Austauschsatzes von dem Traggestell ist somit eine große Kraft erforderlich. Deshalb ist diese nur mit einem Werkzeug ausführbare Handhabung für den Ausführenden mit gewissen Schwierigkeiten verbunden und erfordert eine entsprechende handwerkliche Geschicklichkeit.

Aufgabe der Erfindung ist es, ein Wischblatt der eingangs beschriebenen Art dahingehend zu verbessern, daß sowohl die Montage- als auch die Demontagearbeiten beim Austausch der Wischleiste bzw. des Austauschsatzes einfacher ausführbar sind und keine besondere handwerkliche Begabung der ausführenden Person erfordern. Außerdem soll ein einfach handzuhabender Austauschsatz für ein Wischblatt bereitgestellt werden.

Erfindungsgemäß wird die Aufgabe durch ein Wischblatt mit den Merkmalen des Anspruchs 1 bzw. durch einen Austauschsatz mit den Merkmalen des Anspruchs 11 gelöst. Der Grundgedanke der Erfindung besteht darin, das zu der Endklammer gehörende Rastmittel an einem Ort vorzusehen, der einen ungestörten Zugriff zum Zweck des Lösens der Arretierung erlaubt, und das Rastmittel bzw. die Endklammer so auszubilden, daß einerseits eine funktionssichere Arretierung der Wischleiste bzw. des Austauschsatzes an dem Traggestell des Wischblattes gewährleistet ist und andererseits die Arretierung einfach und mit geringem Kraftaufwand lösbar ist.

Dadurch, daß an der Endklammer nur ein Rastarm mit einem Rastmittel vorhanden ist, ist die Handhabung bereits einfacher als bei einer Endklammer mit zwei Rastarmen. Die Anordnung des nur einen Rastarmes an einer Längsseite der zu der Wischleiste gehörenden Kopfleiste gewährleistet einen direkten und ungestörten Zugriff zu dem Rastmittel. Die Ausbildung des Rastmittels in der Art einer aus dem Rastarm freigeschnittenen Zunge, die in spitzem Winkel von der Kopfleiste hinweg aus dem Rastarm herausgebogen ist und mit ihrer freien Stirnseite als Anschlag der inneren Stirnseite der Endkralle des Traggestells des Wischblattes gegenübersteht, sorgt sowohl für eine funktionssichere Längsarretierung als auch dafür, daß das Lösen der Arretierung mit relativ geringem Kraftaufwand machbar ist. Somit ist ein Wischblatt bzw. ein Austauschsatz für ein Wischblatt entwickelt worden, bei dem die Montage oder der Wechsel des Austauschsatzes auch von handwerklich ungeübten Personen einfach ausführbar ist. Beim Einschieben des Austauschsatzes in Längsrichtung in die Haltekrallen des Traggestells verrastet der Rastarm der Endkralle selbsttätig an der zugeordneten Endkralle. Bei der Demontage muß nur die an dem Rastarm der Endklammer ausgebildete Zunge entgegen ihrer relativ geringen Federkraft gegen die Längsseite der zu der Wischleiste gehörenden Kopfleiste gedrückt und der Austauschsatz längs aus dem Traggestell herausgezogen werden. Je nach der geometrischen Ausbildung und den Werkstoffeigenschaften des Rastarmes kann die Zunge des Rastarmes auch gefahrlos mit dem bloßen Finger oder Fingernagel in seine Entriegelungsstellung gebracht werden.

Vorteilhafte Ausgestaltungen der Erfindung ergeben sich aus den Unteransprüchen 2 bis 10.

Eine Ausgestaltung der Erfindung nach Anspruch 2 ermöglicht es, daß die aus Blech gefertigte Endklammer aufgrund der möglichen geringen Materialdicke flach an der Außenkontur der Kopfleiste anliegen kann. Dadurch ist die Endklammer visuell unauffällig und erfordert nur einen geringen Materialeinsatz. Außerdem kann die bei der Fahrt wirkende Luftströmung wegen der Flachheit des Materials keine spürbaren störenden Einflüsse auf das Strömungsverhalten des Wischblattes ausüben.

Während eine Ausgestaltung der Erfindung nach Anspruch 3 eine dauerhaft sichere Befestigung der Endklammer an der zu der Wischleiste gehörenden Kopfleiste gewährleistet, ist eine Ausgestaltung der Erfindung gemäß Anspruch 4 in bezug auf die Herstellung und die Montage der Endklammer an der Kopfleiste besonders kostengünstig.

Bei einer Ausgestaltung der Erfindung gemäß Anspruch 5 ist eine für eine sichere Arretierung als auch für ein leichtes Lösen der Arretierung optimale Federkraft der Zunge bzw. des Rastarmes der Endklammer sichergestellt.

Eine vorteilhafte Ausgestaltung der Erfindung gemäß Anspruch 6 sieht vor, daß die Längsseiten und die zu dem Basisteil weisende, die Längsseiten verbindende Stirnseite der Zunge aus dem Rastarm freigeschnitten sind und die Zunge mit ihrer der freigeschnittenen Stirnseite gegenüberliegenden Schmalseite mit dem Rastarm verbunden ist, vorzugsweise im Bereich des freien Endes des Rastarmes.

Bevorzugt wird jedoch eine Ausgestaltung gemäß Anspruch 7, wonach die Zunge an einer Längsseite und an der zu dem Basisteil weisenden Stirnseite aus dem Rastarm freigeschnitten ist, während die andere Längsseite der Zunge von der betreffenden ursprünglichen Längsseite des Rastarmes gebildet und die der Stirnseite gegenüberliegende Schmalseite der Zunge mit dem Rastarm verbunden ist, vorzugsweise im Bereich des freien Endes des Rastarmes. Dieses ermöglicht, daß auch bei einer relativ geringen Breite des Rastarmes die Zunge mit einer für die erforderliche Stabilität genügend großen Breite ausgeführt werden kann.

Besonders bevorzugt wird eine Ausgestaltung der Erfindung nach Anspruch 8. Der zusätzlich zu dem Rastarm an der gegenüberliegenden Längsseite der Kopfleiste vorgesehene Führungsarm der Endklammer, der ebenfalls die Endkralle des Traggestells an ihrer Innenseite quert, kann sich beim Betrieb des Scheibenwischers oder bei Krafteinwirkungen von außen, die beispielsweise durch die Bürsten von Fahrzeugwaschanlagen oder beim Betrieb des Scheibenwischers entstehen können, an der Innenseite der Endkralle abstützen. Dadurch wird ein Verkanten der auf der Kopfleiste befestigten Endklammer in bezug auf die Längsrichtung der Kopfleiste und damit ein selbsttätiges Lösen der Arretierung der Endklammer an der Endkralle verhindert. Mit anderen Worten gesagt, wird ein sicherer, unverlierbarer Sitz der Endklammer an der Endkralle des Traggestells gewährleistet.

Eine vorteilhafte Ausgestaltung der Erfindung gemäß Anspruch 9 ist dadurch gekennzeichnet, daß die auf der Kopfleiste befestigte Endklammer zwei Rastarme besitzt, die in bezug auf die senkrechte Längsmittelebene der Wischleiste spiegelbildlich ausgebildet sind und sich jeweils flach entlang einer der gegenüberliegenden Längsseiten der zu der Wischleiste gehörenden Kopfleiste erstrecken. In diesem Fall gestaltet sich zwar das Entfernen der zu ersetzenden Wischleiste bzw. des zu entfernenden Austauschsatzes etwas schwieriger, weil gleichzeitig beide Rastarme in eine Entriegelungsstellung gebracht werden müssen, jedoch gewährt diese Ausgestaltung andererseits den Vorteil einer besonders sicheren Längsarretierung der Wischleiste bzw. des Austauschsatzes am Traggestell.

Für eine Erleichterung des Einbaus einer neuen Wischleiste bzw. eines neuen Austauschsatzes in das Traggestell bzw. der Herbeiführung der selbsttätigen Verrastung des einen Rastarmes bzw. der zwei Rastarme der Endklammer an dem Traggestell ist gemäß einer Ausgestaltung der Erfindung nach Anspruch 10 vorgesehen, daß an der betreffenden Endkralle des Traggestells eine Einführungsschräge für den einen Rastarm bzw. die zwei Rastarme der Endklammer ausgebildet ist. Vorteilhaft ist hier sogar an den beiden gegenüberliegenden Endkrallen eines Traggestells eine gleiche Einführungsschräge auszubilden, unabhängig davon, daß jeweils nur eine davon benutzt wird. Zum einen vereinfacht sich dadurch die Herstellung des Traggestells, weil gleiche Teile verwendet werden, andererseits muß bei einem symmetrisch umschlagbaren Traggestell nicht gesondert auf eine lagerichtige Montage des Wischgummis am Traggestell geachtet werden.

Es wird noch einmal darauf hingewiesen, daß die Erfindung entsprechend dem unabhängigen Anspruch 11 auch allein auf einen Austauschsatz für ein Wischblatt nach einem der Ansprüche 1 bis 8 gereichtet ist. Dieser Austauschsatz für ein Wischblatt einer Scheibenwischvorrichtung zum Reinigen einer Scheibe an einem Fahrzeug, wobei zu dem komplett vormontierten Austauschsatz eine Wischleiste aus elastischem, gummiartigen Material, eine oder mehrere in der zu der Wischleiste gehörenden Kopfleiste angeordnete und gehaltene Federschiene bzw. Federschienen und eine auf einem Ende der Kopfleiste befestigte Endklammer zum Fixieren der Federschiene bzw. Federschienen an der Kopfleiste und zur Längsarretierung der Wischleiste an dem Traggestell des Wischblattes gehören, wobei die Endklammer einen sich in Längsrichtung der Kopfleiste erstreckenden Rastarm besitzt, der nach der Montage des Austauschsatzes an dem Traggestell die zugeordnete Endkralle des Traggestells an deren Innenseite quert und mit einem Rastmittel die innere Stirnseite der Endkralle hintergreift.

Anhand einer Zeichnung werden nachfolgend weitere Einzelheiten der Erfindung näher beschrieben. Es zeigen:
- Fig. 1a: in perspektivischer Darstellung einen Endabschnitt eines erfindungsgemäßen Wischblattes mit einem an einem Traggestell gehaltenen Austauschsatz,
- Fig. 1b: in perspektivischer Darstellung eine in Fig. 1 verwendete Endklammer,
- Fig. 2a: eine Draufsicht zu Figur 1a und
- Fig. 2b: eine Draufsicht zu Figur 1b.

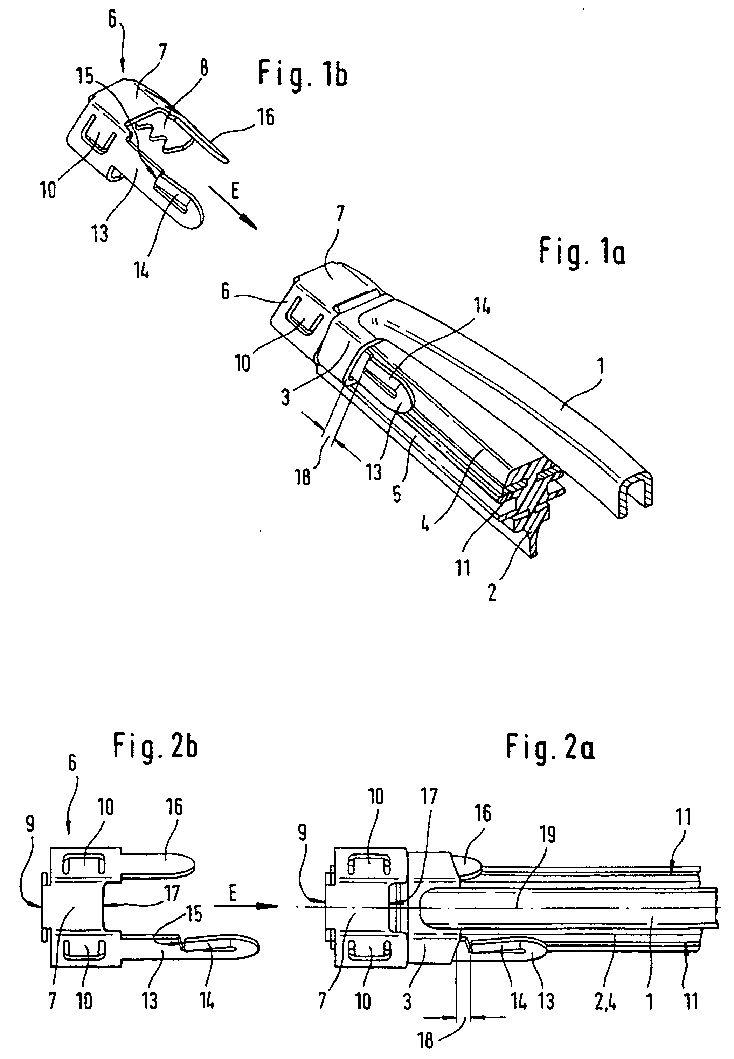

In den Fig. 1a und 2a ist ein Endabschnitt eines Wischblattes für eine Scheibenwischvorrichtung zum Reinigen einer Scheibe an einem Fahrzeug bzw. ein Endabschnitt eines von einem Traggestell 1 eines Wischblattes gehaltenen Austauschsatzes gezeigt. Das Traggestell 1, das eingliedrig oder mehrgliedrig ausgebildet sein kann, ist mit Krallen zum Halten und Führen einer Wischleiste 2 aus elastischem, gummiartigen Material ausgestattet. Die Krallen des Traggestells 1, die in der Art der in den Fig. 1a und 2a sichtbaren Endkralle 3 ausgebildet sind, halten die zu der Wischleiste 2 gehörende Kopfleiste 4, indem sie von oben her die Kopfleiste 4 zumindest teilweise umgreifen und in Längsnuten 5 eingreifen, die an den gegenüberliegenden Längsseiten der Kopfleiste 4 ausgebildet sind. Um die Wischleiste 2 bzw. den komplett vormontierten Austauschsatz an dem Traggestell 1 zu montieren, wird dieser von dem in den Fig. 1a und 2a gezeigten Ende des Traggestells 1 her in die Endkralle 3 und die anderen Krallen des Traggestells 1 eingeführt. In den Fig. 1b und 2b ist mit einem Pfeil die Einschubrichtung E gekennzeichnet, welche in Längsrichtung der Wischleiste 2 bzw. der Kopfleiste 4 verläuft.

Da die Wischleiste 2 verliersicher an dem Traggestell 1 gehalten sein muß, ist eine Längsarretierung der Wischleiste 2 bzw. der Kopfleiste 4 an dem Traggestell 1 erforderlich. Dazu dient eine Endklammer 6, die dauerhaft auf dem einen Ende der zu der Wischleiste 2 gehörenden Kopfleiste 4 befestigt ist. Die Endklammer 6 (siehe auch Fig. 1b und 2b) ist aus Blech gefertigt und weist einen Basisteil 7 auf, der im wesentlichen an die Außenkontur des Endabschnittes der Kopfleiste 4 angepaßt ist. Der Basisteil 7 umgreift von oben her den Endabschnitt der Kopfleiste 4 und greift mit den gegenüberliegenden Krallen 8 in die gleichen Längsnuten 5 der Kopfleiste 4 ein, die für die Krallen des Traggestells 1 bestimmt sind. Durch eine plastische Verformung des Basisteils 7 in Richtung der Krallen 8 wird die Endklammer 6 fest auf der Kopfleiste 4 verklemmt. Die an den Krallen 8 der Endklammer 6 ausgebildeten Zähne drücken sich dabei in das Material der Kopfleiste 4 ein und sorgen für einen festen Sitz der Endklammer 6 auf der Kopfleiste 4. Zur weiteren Erhöhung der Stabilität dieser Befestigung liegt der Basisteil 7 mit einer stirnseitigen Wand 9 an der Stirnseite der Kopfleiste 4 an, wodurch ein verbesserter Formschluß erreicht wird.

Aus den gegenüberliegenden Seitenwänden des Basisteiles 7 sind noch zungenartige Befestigungsabschnitte 10 freigeschnitten, die dazu bestimmt sind, eine oder zwei Federschienen 11 in Längsrichtung an dem Ende der Kopfleiste 4 zu arretieren. Entweder ist nur eine Federschiene 11 in einem umfangsseitig geschlossenen Längskanal der Kopfleiste angeordnet oder es sind, wie bei dem dargestellten Ausführungsbeispiel, zwei Federschienen 11 vorgesehen. Im letzteren Fall sind die Federschienen 11 jeweils in eine weitere, an den gegenüberliegenden Längsseiten der Kopfleiste 4 ausgebildete Längsnut eingelegt. Gegen seitliches Herausgleiten werden diese zwei Federschienen 11 durch die Krallen des Traggestells 1 gesichert. Für die erforderliche Längsarretierung der Federschienen 11 werden die an der Endklammer 6 ausgebildeten Befestigungsabschnitte 10 plastisch nach einwärts verformt. In dem in den Fig. 1a und 2a gezeigten Ausführungsbeispiel greifen dann die Befestigungsabschnitte 10 in korrespondierende Ausnehmungen an den Enden der Federschienen 11 ein. Im Falle der nicht dargestellten Variante mit nur einer in einem Längskanal der Kopfleiste angeordneten Federschiene wird durch die plastische Verformung der Befestigungsabschnitte 10 Material der Kanalwand in entsprechende seitliche Ausnehmungen der einen Federschiene eingedrückt. Somit kann ein komplett vorgefertigter Austauschsatz bestehend aus Wischleiste 2, Federschiene bzw. Federschienen 11 und Endklammer 6 als einfach handhabbare Baueinheit bereitgestellt werden.

Von besonderer Bedeutung im Hinblick auf die Erfindung ist die Ausbildung des zu der Endklammer 6 gehörenden Rastarmes 13. Der Rastarm 13 besitzt eine im wesentlichen ebene längliche Gestalt. Er geht von dem Basisteil 7 der Endklammer 6 aus und erstreckt sich in Längsrichtung flach entlang einer der beiden Längsseiten der Kopfleiste 4. Dabei ist es unwesentlich, ob die Kopfleiste 4 eine im wesentliche trapezförmige oder rechteckige Querschnittskontur besitzt. Als Rastmittel ist an dem Rastarm 13 eine Zunge 14 ausgebildet, die mit ihrer länglichen, rechteckigen Form in Längsrichtung des Rastarmes 13 bzw. der Kopfleiste 4 ausgerichtet ist. In der Art einer Ausklinkung ist die Zunge 14 an ihrer inneren Längsseite und an ihrer zu dem Basisteil 7 der Endklammer 6 weisenden Stirnseite 15 von dem übrigen Rastarm 13 freigeschnitten und in einem flachen, spitzen Winkel von der Kopfleiste 4 hinweg aus der Ebene des Rastarmes herausgebogen. Die der freigeschnittenen Längsseite der Zunge 14 gegenüberliegende Längsseite wird dabei von einem Teil der ursprünglichen Längsseite des Rastarmes gebildet, und an der der Stirnseite 15 gegenüberliegenden Schmalseite ist die Zunge 14 im Bereich des freien Endes des Rastarmes 13 mit dem übrigen Rastarm verbunden.

Zu der Endklammer 6 gehört ferner ein länglicher, ebener Führungsarm 16, der sich ausgehend von dem Basisteil 7 der Endklammer 6 flach entlang der dem Rastarm 13 gegenüberliegenden Längsseite der Kopfleiste 4 erstreckt. Wenn die Wischleiste 2 bzw. der komplett vormontierte Austauschsatz an dem Traggestell 1 des Wischblattes montiert ist, queren der Rastarm 13 und der Führungsarm 16, wie in Fig. 2a gezeigt, die der Endklammer 6 zugeordnete Endkralle 3 des Traggestells 1 an deren Innenseite. Der Rastarm 13 und der Führungsarm 16 können sich mit ihren Außenseiten an der Innenseite der Endkralle 3 abstützen, und die freigeschnittene Stirnseite 15 der Zunge 14 steht als Anschlag der inneren Stirnseite der Endkralle 3 des Traggestells 1 gegenüber. Da außerdem die innere Stirnseite 17 des Basisteils 7 der Endklammer 6 als Anschlag mit der äußeren Stirnseite der Endkralle 3 zusammenwirkt, ist die erforderliche Längsarretierung der Wischleiste 2 bzw. des Austauschsatzes an dem Traggestell 1 gewährleistet. Das in den Fig. 1a und 2a ersichtliche kleine Längsspiel 18 zwischen der Endklammer 6 und der Endkralle 3, das die Funktion des Wischblattes nicht beeinträchtigt, kann vorteilhaft zum Ausgleich maßlicher Toleranzen verwendet werden.

Bei der in den Fig. 1a und 2a dargestellten, bevorzugten Ausführungsform der Erfindung liegen der Haltearm 13 und der Führungsarm 16 auf den gegenüberliegenden Längsseiten der Kopfleiste 4 auf und queren die Endkralle 3 an deren Innenseite. Dadurch sind eine besonders konturenenge Bauweise und eine besonders sichere Arretierung der Endklammer 6 an der Wischleiste 2 gewährleistet.

Um eine Wischleiste 2 bzw. einen komplett vormontierten Austauschsatz mit einem Traggestell 1 zu einem Wischblatt zu vereinen, wird der Austauschsatz von einem Ende her in Einführungsrichtung E so in die Endkralle 3 bzw. die Haltekrallen des Traggestells eingeschoben, daß diese in die Längsnuten 5 an den Längsseiten der zu der Wischleiste 2 gehörenden Kopfleiste 4 eingreifen. Gegen Ende des Einschubvorganges gelangt zuerst der längere Rastarm 13 und dann auch der kürzere Führungsarm 16 unter die Innenseite der betreffenden Endkralle 3 des Traggestells 1. Da die freien Enden des Rastarmes 13 und des Führungsarmes 16 in bezug auf ihre Breite als Einführhilfe verjüngt sind, gelangen der Rastarm 13 und der Führungsarm 16 selbsttätig in die ihnen zugedachte Position, in welcher sie die Endkralle 3 an deren Innenseite queren. Wenn die als Rastmittel dienende Zunge 14 des Rastarmes 13 beim Einschieben die Innenseite der Endkralle 3 passiert, wird sie vorübergehend federelastisch in Richtung der Kopfleiste 4, also quer zur Materialdicke des Rastarmes 13, ausgelenkt, und hinter der inneren Stirnseite der Endkralle 3 schnappt sie in ihre Normalstellung zurück. Somit quert der Rastarm 13 der Endklammer 6 die Endkralle 3 an deren Innenseite und hintergreift mit der Zunge 14 die innere Stirnseite der Endkralle 3, womit die erforderliche Längsarretierung der Wischleiste 2 bzw. des Austauschsatzes an dem Traggestell 1 hergestellt ist.

Zur Demontage der Wischleiste 2 bzw. des Austauschsatzes von dem Traggestell 1 wird die Zunge 14 an dem Rastarm 13 der Endklammer 6 durch entsprechenden Druck mit dem Finger oder Fingernagel oder einem Werkzeug allein oder gemeinsam mit dem Rastarm 13 entgegen ihrer Federkraft in eine Freigabeposition ausgelenkt. Gleichzeitig wird die Endklammer 6 bzw. die Wischleiste 2 oder der Austauschsatz entgegen der Einschubrichtung E längs aus den Haltekrallen des Traggestells 1 herausgezogen.

Wenn man eine besonders sichere Längsarretierung der Wischleiste 2 bzw. des Austauschsatzes an dem Traggestell 1 erreichen möchte und dafür in Kauf nimmt, daß sich das Entrasten der Endklammer 6 von der Enkralle 3 des Traggestells 1 etwas schwieriger gestaltet als bei dem in der Zeichnung dargestellten und vorstehend beschriebenen Ausführungsbeispiel, dann sollte die Endklammer 6 zwei Rastarme 13 aufweisen, die in bezug auf die senkrechte Längsmittelebene 19 (Fig. 2a) spiegelbildlich ausgebildet und angeordnet sind. Unter Hinweis auf die Zeichnung wäre somit anstelle des Führungsarmes 16 ein zweiter, spiegelbildlich zum ersten ausgebildeter Rastarm 13 vorgesehen. Zum Entfernen der Wischleiste 2 bzw. des Austauschsatzes vom Traggestell 1 müssen beide Rastarme 13 bzw. die Zungen 14 an den beiden Rastarmen 13 in Entriegelungsposition gedrückt und die Endklammer 6 mit der Wischleiste 2 längs aus den Haltekrallen des Traggestells 1 herausgezogen werden.

Der konstruktive Aufbau, die Handhabung und die Funktion eines komplett vormontierten Austauschsatzes, auf den sich die Erfindung auch bezieht, ist ebenfalls aus der Zeichnung und der vorstehenden Beschreibung ersichtlich, so daß diese Dinge nicht noch einmal gesondert dargestellt und beschrieben werden müssen.

### Bezugszeichenliste

- 1: Traggestell
- 2: Wischleiste
- 3: Endkralle
- 4: Kopfleiste
- 5: Längsnut
- 6: Endklammer
- 7: Basisteil
- 8: Kralle
- 9: stirnseitige Wand
- 10: Befestigungsabschnitt
- 11: Federschiene
- 13: Rastarm
- 14: Zunge
- 15: Stirnseite
- 16: Führungsarm
- 17: Stirnseite
- 18: Längsspiel
- 19: senkrechte Längsmittelebene
- E: Einschubrichtung

## Patentansprüche

1. Wischblatt für eine Scheibenwischvorrichtung zum Reinigen einer Scheibe an einem Fahrzeug mit einer auswechselbaren Wischleiste (2) aus elastischem, gummiartigen Material, die an einem langgestreckten Traggestell (1) gehalten ist, indem Haltekrallen des Traggestells (1) die zu der Wischleiste (2) gehörende Kopfleiste (4) von oben her zumindest teilweise umfassen und in an den gegenüberliegenden Längsseiten der Kopfleiste (4) ausgebildete Längsnuten (5) eingreifen und eine auf einem Ende der Kopfleiste (4) befestigte Endklammer (6) die Wischleiste (2) in bezug auf ihre Längsrichtung unverlierbar an dem Traggestell (1) hält, wobei ein sich in Längsrichtung der Kopfleiste (4) erstreckender, zu der Endklammer (6) gehörender Rastarm (13) die zugeordnete Endkralle (3) des Traggestells (1) an deren Innenseite quert und mit einem Rastmittel die innere Stirnseite der Endkralle (3) hintergreift, wobei der Rastarm (13) der Endklammer (6) eine im wesentlichen ebene, längliche Gestalt besitzt und sich flach entlang der zu der Wischleiste (2) gehörenden Kopfleiste (4) erstreckt, wobei das Rastmittel eine aus dem Rastarm (13) freigeschnittene und aus der Ebene des Rastarmes (13) von der Kopfleiste (4) hinweg herausgebogene Zunge (14) ist, deren Stirnseite (15) als Anschlag der inneren Stirnseite der Endkralle (3) des Traggestells (1) gegenübersteht, **dadurch gekennzeichnet, dass** sich der Rastarm (13) der Endklammer (6) entlang einer Längsseite der Kopfleiste (4) erstreckt und die Zunge (14) aus der Ebene des Rastarmes (13) in spitzem Winkel von der Kopfleiste (4) hinweg herausgebogen ist.

2. Wischblatt nach Anspruch 1, **dadurch gekennzeichnet, daß** die Endklammer (6) aus Blech gefertigt ist.

3. Wischblatt nach einem der vorhergehenden Ansprüche, **dadurch gekennzeichnet, daß** die Endklammer (6) mit einem Basisteil (7) das Ende der zu der Wischleiste (2) gehörenden Kopfleiste (4) zumindest teilweise umfaßt und daß gegenüberliegende, vorzugsweise mit Zähnen besetzte, Krallen (8) der Endklammer (6) in die für die Haltekrallen des Traggestells (1) bestimmten Längsnuten (6) der Kopfleiste (4) eingreifen und durch plastische Verformung an der Kopfleiste (4) festgeklemmt sind.

4. Wischblatt nach einem der vorhergehenden Ansprüche, **dadurch gekennzeichnet, daß** die Endklammer (6) als einziges, einstückiges Bauteil ausgebildet und ohne Verwendung zusätzlicher Bauteile an der zu der Wischleiste (2) gehörenden Kopfleiste (4) befestigt ist.

5. Wischblatt nach einem der vorhergehenden Ansprüche, **dadurch gekennzeichnet, daß** die Zunge (14) und/oder der Rastarm (13) der Endklammer (6) quer zur Dicke des Rastarmes (13) federelastisch auslenkbar ist.

6. Wischblatt nach einem der vorhergehenden Ansprüche, **dadurch gekennzeichnet, daß** die Längsseiten und die zu dem Basisteil (7) weisende, die Längsseiten verbindende Stirnseite (15) der Zunge (14) aus dem Rastarm (13) freigeschnitten sind und die Zunge (14) mit ihrer der freigeschnittenen Stirnseite (15) gegenüberliegenden Schmalseite mit dem Rastarm (13) verbunden ist, vorzugsweise im Bereich des freien Endes des Rastarmes (13).

7. Wischblatt nach einem der vorhergehenden Ansprüche, **dadurch gekennzeichnet, daß** die Zunge (14) an einer Längsseite und an der zu dem Basisteil (7) weisenden Stirnseite (15) aus dem Rastarm (13) freigeschnitten ist, während die andere Längsseite der Zunge (14) von der betreffenden ursprünglichen Längsseite des Rastarmes (13) gebildet und die der Stirnseite (15) gegenüberliegende Schmalseite der Zunge (14) mit dem Rastarm (13) verbunden ist, vorzugsweise im Bereich des freien Endes des Rastarmes (13).

8. Wischblatt nach einem der vorhergehenden Ansprüche, **dadurch gekennzeichnet, daß** zu der Endklammer (6) ein im wesentlichen ebener Führungsarm (16) gehört, der sich ausgehend von dem Basisteil (7) der Endklammer (6) flach entlang der dem Rastarm (13) gegenüberliegenden Längsseite der zu der Wischleiste (2) gehörenden Kopfleiste (4) erstreckt und die der Endklammer (6) zugeordnete Endkralle (3) des Traggestells (1) an deren Innenseite quert ohne die Endkralle (3) zu hinterrasten.

9. Wischblatt nach einem der vorhergehenden Ansprüche 1 bis 7, **dadurch gekennzeichnet, daß** die auf der Kopfleiste (4) befestigte Endklammer (6) zwei Rastarme (13) besitzt, die in bezug auf die senkrechte Längsmittelebene (19) der Wischleiste (2) spiegelbildlich ausgebildet sind und sich jeweils flach entlang einer der gegenüberliegenden Längsseiten der zu der Wischleiste (2) gehörenden Kopfleiste (4) erstrecken.

10. Wischblatt nach einem der vorhergehenden Ansprüche, **dadurch gekennzeichnet, daß** an der der Endklammer (6) zugeordneten Endkralle (3) des Traggestells (1) eine Einführungsschräge (19) für den einen Haltearm (13) bzw. die zwei Haltearme (13) der Endklammer (6) ausgebildet ist, vorzugsweise jedoch an den beiden gegenüberliegenden Endkrallen (3) des Traggestells (1).

11. Austauschsatz für ein Wischblatt nach einem der Ansprüche 1 bis 8, **dadurch gekennzeichnet, daß** zu dem komplett vormontierten Austauschsatz eine Wischleiste (2) aus elastischem, gummiartigen Material, eine oder mehrere in der zu der Wischleiste (2) gehörenden Kopfleiste (4) angeordnete und gehaltene Federschiene (11) bzw. Federschienen (11) und eine auf einem Ende der Kopfleiste (4) befestigte Endklammer (6) zum Fixieren der Federschiene (11) bzw. Federschienen (11) an der Kopfleiste (4) und zur Längsarretierung der Wischleiste (2) an dem Traggestell (1) des Wischblattes gehören, wobei die Endklammer (6) einen sich in Längsrichtung der Kopfleiste (4) erstreckenden Rastarm (13) besitzt, der nach der Montage des Austauschsatzes an dem Traggestell (1) die zugeordnete Endkralle (3) des Traggestells (1) an deren Innenseite quert und mit einem Rastmittel die innere Stirnseite der Endkralle (3) hintergreift.

## Claims

1. A wiper blade for a windscreen wiper device for cleaning the windscreen of a vehicle, having an exchangeable wiper squeegee (2) of resilient, rubber-type material, which is held on an elongate supporting frame (1) in that holding claws of the supporting frame (1) at least partially surround the head strip (4) belonging to the wiper squeegee (2) from above and engage in longitudinal grooves (5), which are formed on the opposing longitudinal sides of the head strip (4) and an end clip (6) fastened to one end of the head strip (4) holds the wiper squeegee (2) with regard to its longitudinal direction captively on the supporting frame (1), a latching arm (13) extending in the longitudinal direction of the head strip (4) and associated with the end clip (6) passing through the associated end claw (3) of the supporting frame (1) on the inside thereof and engaging with a latching means behind the inner end face of the end claw (3), the latching arm (13) of the end clip (6) being substantially planar and elongate in form and extending flat along the head strip (4) belonging to the wiper squeegee (2), the latching means being a tongue (14) cut free from the latching arm (13) and bent out of the plane of the latching arm (13) away from the head strip (4), the end face (15) of the tongue (14) facing as a limit stop the inner end face of the end claw (3) of the supporting frame (1), **characterised in that** the latching arm (13) of the end clip (6) extends along one longitudinal side of the head strip (4) and the tongue (14) is bent out of the plane of the latching arm (13) at an acute angle away from the head strip (4).

2. A wiper blade according to claim 1, **characterised in that** the end clip (6) is made of sheet metal.

3. A wiper blade according to one of the preceding claims, **characterised in that** the end clip (6) at least partially surrounds the end of the head strip (4) belonging to the wiper squeegee (2) with a base part (7) and **in that** opposing claws (8), preferably provided with teeth, of the end clip (6) engage in the longitudinal grooves (6) of the head strip (4) intended for the holding claws of the supporting frame (1) and are clamped to the head strip (4) by plastic deformation.

4. A wiper blade according to one of the preceding claims, **characterised in that** the end clip (6) takes the form of a single, one-piece component and is fastened to the head strip (4) belonging to the wiper squeegee (2) without the use of additional components.

5. A wiper blade according to one of the preceding claims, **characterised in that** the tongue (14) and/or the latching arm (13) of the end clip (6) may be deflected resiliently transversely of the thickness of the latching arm (13).

6. A wiper blade according to one of the preceding claims, **characterised in that** the longitudinal sides and the end face (15) of the tongue (14) pointing towards the base part (7) and connecting the longitudinal sides are cut free from the latching arm (13) and the tongue (14) is connected by its opposite narrow side from the cut-free end face (15) with the latching arm (13), preferably in the area of the free end of the latching arm (13).

7. A wiper blade according to one of the preceding claims, **characterised in that** the tongue (14) is cut free from the latching arm (13) at one longitudinal side and at the end face (15) pointing towards the base part (7), while the other longitudinal side of the tongue (14) is formed from the relevant original longitudinal side of the latching arm (13) and the opposite narrow side of the tongue (14) from the end face (15) is connected with the latching arm (13), preferably in the area of the free end of the latching arm (13).

8. A wiper blade according to one of the preceding claims, **characterised in that** the end clip (6) is associated with a substantially planar guide arm (16), which extends from the base part (7) of the end clip (6) flat along the opposite longitudinal side of the head strip (4) belonging to the wiper squeegee (2) from the latching arm (13) and passes through the inside of the end claw (3) of the supporting frame (1) associated with the end clip (6) without latching behind the end claw (3).

9. A wiper blade according to one of preceding claims 1 to 7, **characterised in that** the end clip (6) fastened to the head strip (4) has two latching arms (13), which are formed as mirror images relative to the perpendicular longitudinal central plane (19) of the wiper squeegee (2) and each extend flat along one of the opposing longitudinal sides of the head strip (4) belonging to the wiper squeegee (2).

10. A wiper blade according to one of the preceding claims, **characterised in that** a lead-in bevel (19) for the one holding arm (13) or the two holding arms (13) of the end clip (6) is formed on the end claw (3) of the supporting frame (1) associated with the end clip (6), but preferably on the two opposing end claws (3) of the supporting frame (1).

11. A replacement set for a wiper blade according to one of claims 1 to 8, **characterised in that** the fully preassembled replacement set comprises a wiper squeegee (2) of resilient, rubber-type material, one or more spring bars (11) arranged and held in the head strip (4) belonging to the wiper squeegee (2) and an end clip (6) fastened to one end of the head strip (4) for fixing the spring bar or bars (11) to the head strip (4) and for lengthwise locking of the wiper squeegee (2) to the supporting frame (1) of the wiper blade, wherein the end clip (6) has a latching arm (13) extending in the longitudinal direction of the head strip (4), which latching arm (13) passes through the associated end claw (3) of the supporting frame (1) on the inside thereof after mounting of the replacement set on the supporting frame (1) and engages with a latching means behind the inner end face of the end claw (3).

## Revendications

1. Balai d'essuie-glace pour un dispositif d'essuie-glace destiné au nettoyage d'un pare-brise sur un véhicule automobile, comprenant une raclette d'essuyage (2) détachable, en matériau élastique du type caoutchouc, qui est maintenue contre une structure de support (1) allongée, du fait que les griffes de retenue de la structure de support (1) chevauchent partiellement par le haut le talon supérieur (4), qui appartient à la raclette d'essuyage (2), et pénètrent dans des rainures longitudinales, qui sont réalisées dans les faces longitudinales opposées du talon supérieur (4), et une pince d'extrémité (6), fixée sur une extrémité du talon supérieur (4), maintient la raclette d'essuyage (2) de manière imperdable par rapport à la direction longitudinale contre la structure de support (1), dans lequel un bras d'arrêt (13), qui s'étend dans le sens longitudinal du talon supérieur (4) et appartient à la pince d'extrémité (6), traverse la griffe d'extrémité (3) associée de la structure de support (1) au niveau de sa face intérieure et est reçu avec un moyen d'arrêt en aval de la face frontale intérieure de la griffe d'extrémité (3), dans lequel le bras d'arrêt (13) de la pince d'extrémité (6) possède une forme allongée sensiblement plane et s'étend à plat le long du talon supérieur (4) appartenant à la raclette d'essuyage (2), dans lequel le moyen d'arrêt est une languette (14), qui est découpée dans le bras d'arrêt (13) et est repliée hors du plan du bras d'arrêt (13) en s'écartant du talon supérieur (4), et dont la face frontale (15) formant une butée est disposée en face de la face frontale intérieure de la griffe d'extrémité (3) de la structure de support (1), **caractérisé en ce que** le bras d'arrêt (13) de la pince d'extrémité (6) s'étend le long d'une face longitudinale du talon supérieur (4) et la languette (14) est repliée hors du plan du bras d'arrêt (13) pour s'écarter du talon supérieur (4) en formant un angle aigu.

2. Balai d'essuie-glace selon la revendication 1, **caractérisé en ce que** la pince d'extrémité (6) est réalisée en tôle.

3. Balai d'essuie-glace selon l'une quelconque des revendications précédentes, **caractérisé en ce que** la pince d'extrémité (6) avec une partie de base (7) chevauche au moins partiellement l'extrémité du talon supérieur (4) appartenant à la raclette d'essuyage (2) et **en ce que** les griffes (8), opposées et munies de préférence de dents, de la pince d'extrémité (6) pénètrent dans les rainures longitudinales (5) du talon supérieur (4), définies pour les griffes de retenue de la structure de support (1), et sont bloquées sous l'effet de la déformation plastique du talon supérieur (4).

4. Balai d'essuie-glace selon l'une quelconque des revendications précédentes, **caractérisé en ce que** la pince d'extrémité (6) est conçue sous forme de composant unique en une seule pièce et est fixée sans l'utilisation de pièces supplémentaires contre le talon supérieur (4) appartenant à la raclette d'essuyage (2).

5. Balai d'essuie-glace selon l'une quelconque des revendications précédentes, **caractérisé en ce que** la languette (14) et/ou le bras d'arrêt (13) de la pince d'extrémité (6) peuvent être déviés élastiquement transversalement par rapport à l'épaisseur du bras d'arrêt (13).

6. Balai d'essuie-glace selon l'une quelconque des revendications précédentes, **caractérisé en ce que** les faces longitudinales et la face frontale (15) de la languette (14), orientée vers la partie de base (7) et reliant les faces longitudinales, sont découpées dans le bras d'arrêt (13) et la languette (14), avec son petit côté opposé à la face frontale (15) découpée, est reliée au bras d'arrêt (13), de préférence dans la zone de l'extrémité libre du bras d'arrêt (13).

7. Balai d'essuie-glace selon l'une quelconque des revendications précédentes, **caractérisé en ce que** la languette (14) est découpée hors du bras d'arrêt (13) sur une face longitudinale et sur la face frontale (15) orientée vers la partie de base (7), alors que l'autre face longitudinale de la languette (14) est formée par la face longitudinale initiale concernée du bras d'arrêt (13) et le petit côté de la languette (14), opposé à la face frontale (15), est relié au bras d'arrêt (13), de préférence dans la zone de l'extrémité libre du bras d'arrêt (13).

8. Balai d'essuie-glace selon l'une quelconque des revendications précédentes, **caractérisé en ce que** la pince d'extrémité (6) comporte un bras de guidage (16) sensiblement plat, qui s'étend à partir de la partie de base (7) de la pince d'extrémité (6) à plat le long de la face longitudinale, opposée au bras d'arrêt (13), du talon supérieur (4) appartenant à la raclette d'essuyage (2) et qui traverse la griffe d'extrémité (3), associée à la pince d'extrémité (6), de la structure de support (1) au niveau de sa face intérieure sans bloquer la griffe d'extrémité (3) à l'arrière.

9. Balai d'essuie-glace selon l'une quelconque des revendications 1 à 7, **caractérisé en ce que** la pince d'extrémité (6), fixée sur le talon supérieur (4), possède deux bras d'arrêt (13), qui sont conçus symétriquement par rapport au plan médian longitudinal vertical (19) de la raclette d'essuyage (2) et qui s'étendent chacun à plat le long de l'une des faces longitudinales opposées du talon supérieur (4) appartenant à la raclette d'essuyage (2).

10. Balai d'essuie-glace selon l'une quelconque des revendications précédentes, **caractérisé en ce que** sur la griffe d'extrémité (3), associée à la pince d'extrémité (6), de la structure de support (1) est réalisée une rampe d'engagement pour le seul bras d'arrêt (13) ou les deux bras d'arrêt (13) de la pince d'extrémité (6), de préférence cependant sur les deux griffes d'extrémité (3) opposées de la structure de support (1).

11. Ensemble de remplacement pour un balai d'essuie-glace selon l'une quelconque des revendications 1 à 8, **caractérisé en ce que** le ensemble de remplacement pré-assemblé complet est formé par une raclette d'essuyage (2) en matériau élastique de type caoutchouc, un profilé élastique (11) ou plusieurs profilés élastiques (11), agencés et maintenus dans le talon supérieur (4) appartenant à la raclette d'essuyage (2), et une pince d'extrémité (6), qui est fixée sur une extrémité du talon supérieur (4) et est destinée à la fixation du profilé élastique (11) ou des profilés élastiques (11) contre le talon supérieur (4) et à l'immobilisation longitudinale de la raclette d'essuyage (2) sur la structure de support (1) du balai d'essuie-glace, la pince d'extrémité (6) comportant un bras d'arrêt (13) qui s'étend dans le sens longitudinal du talon supérieur (4) et qui, après le montage du ensemble de remplacement contre la structure de support (1), traverse la griffe d'extrémité (3) correspondante de la structure de support (1) au niveau de sa face intérieure et est reçu avec un moyen d'arrêt en aval de la face frontale intérieure de la griffe d'extrémité (3).
